Europäisches Patentamt

European Patent Office

Office européen des brevets

(11) Veröffentlichungsnummer: **0 453 852 A1**

# EUROPÄISCHE PATENTANMELDUNG

(21) Anmeldenummer: 91105531.7

(22) Anmeldetag: 08.04.91

(51) Int. Cl.5: **A01B 49/02**

(30) Priorität: 23.04.90 HU 252690

(43) Veröffentlichungstag der Anmeldung:
30.10.91 Patentblatt 91/44

(84) Benannte Vertragsstaaten:
**AT BE CH DE DK ES FR GB IT LI NL SE**

(71) Anmelder: **AGRIKON MEZöGéP üZLETAG KECSKEMéT**
**Külsö-Szegedi ut, 136**
**H-6000 Kecskemét(HU)**

(72) Erfinder: **Ember, Csaba**
**Széchenyi krt. 36**
**Kecskemét(HU)**
Erfinder: **Mészöly, Laszlo**
**Széchenyi tér 1-3**
**Kecskemét(HU)**
Erfinder: **Olah, Menyhért**
**Kulich Gy. u. 5**
**Kecskemét(HU)**
Erfinder: **Lakatos, Sandor**
**Aradi Vétanuk tere 4**
**Kecskemét(HU)**
Erfinder: **Ballus, Tivadar**
**Széchenyi krt. 34/a**
**Kecskemét(HU)**
Erfinder: **Székeli, Tibor**
**Puskin u. 32**
**Kecskemét(HU)**

(74) Vertreter: **Patentanwälte Viering & Jentschura**
**Steinsdorfstrasse 6 Postfach 22 14 43**
**W-8000 München 22(DE)**

(54) **Bodenbearbeitungsmaschinensystem.**

(57) Bodenbearbeitungsmaschinensystem, insbesondere zum Stoppelschälen und zur Bodenvorbereitung sowie zur Zwischenreihenbestellung von Plantagen und Ackerpflanzenkulturen, das an eine Zugmaschine mittels eines Hängewerkes (2) angeschlossen ist und aus der Kombination eines als schwerer Kultivator ausgebildeten, mit einem das Hängewerk (2) aufweisenden Hauptträgerrahmen (1) und einzeln in einer oder mehreren Reihen angeordneten Kultivatorgliedern (6) versehenen Bodengrundbearbeitungsgerätes und von mit insbesondere bodenbetriebenen Werkzeugen versehenen Bodenfeinbearbeitungsgeräten, wie mit Schneidkante versehenen Feinbearbeitungsgeräten z.B. Rollhacken (8) oder Spateneggen, oder Scheibeneggen, die auf einem mit einer festen Verbindungs- oder einer Parallelogrammaufhängung mit einer Tiefenverstellvorrichtung (11) an den Hauptträgerrahmen (1) angeschlossenen Flachträgerrahmen (7) sowie einem weiteren Bodenfeinbearbeitungsgerät besteht, das ein oder mehrere mit Zugbalken (14) versehene, im Rahmen (12) gelagerte, über ein bestimmtes Profil verfügende, die Bodenoberfläche gestaltende Geräte (9) aufweist und mit seinem Rahmen (12) über eine verstellbare Tiefenbegrenzervorrichtung (13) entweder an den Hauptträgerrahmen (1) oder den Flachträgerrahmen (7) angelenkt ist, wobei die Lage der an dem Hauptträgerrahmen (1) und der an dem Flachträgerrahmen (7) befestigten Bodenbearbeitungsgeräte verstellbar ist.

Fig. 1

Die Erfindung bezieht sich auf ein Bodenbearbeitungsmaschinensystem, insbesondere für Stoppelschälen und Bodenvorbereitung sowie zur Zwischenreihenbestellung von Plantagen und Ackerpflanzenkulturen, das aus einer Kombination des mit einem Bodenlockerungswerkzeug versehenen Bodengrundbearbeitungsgerätes und der mit insbesondere bodenangetriebenen Stellungswerkzeugen versehenen Feinbearbeitungsgeräte besteht.

Die Laufwerke der Kraftmaschinen, Arbeitsmaschinen, Fördermittel, aber auch ein Teil der Bodenbearbeitungsgeräte üben einen Druck auf den Boden aus. Demzufolge kommt es zur Verdichtung der verschiedenen Bodenschichten, die Bodenstruktur wird beeinträchtigt und letzten Endes vermindern sich die Erträge. Auch die Pflanzenkulturen erhöhen im Verlaufe ihrer natürlichen Vegetationsdauer das Austrocknen der oberen Bodenschicht und mit ihren Wurzelresten den Verdichtungsgrad des Bodens. Nach der Ernte kann die Humusbildung aus den im Boden zurückgebliebenen Wurzel- und Stengelresten nur durch Lockerung und Rigolierung und Einmengung in den Boden verwirklicht werden.

Zur Bodenlockerung sind die herkömmlichen zur Rigolierung und Melioration eingesetzten Tieflockerer bekannt. Den Bodenzustand gesehen kann eine ähnliche Wirkung auch mit den zur Bodenlockerung entwickelten Geräten erreicht werden. Als Geräte der Lockerungs-Grundarbeiten sind die Kultivatoren, für die Bodenlockerung bis 15 cm, die schweren Kultivatoren für die Bodenlockerung von 10-30 cm, die Mitteltiefbodenlockerer für 30-50 cm, die Untergrundlockerer für Tiefen unter 50 cm ohne Rigolierung des Bodens bekannt, wobei jedoch auch die schweren Scheibeneggen und die Grabmaschinen hierzu gezählt werden können.

Bekannt ist hingegen, daß diese Grundbearbeitungsgeräte die Bodenoberfläche nach ihrer Arbeit in der Mehrzahl unbearbeitet lassen. Die der Grundbearbeitung folgende Feinbearbeitung kann in guter Qualität mit geringem Energieaufwand am besten gleichzeitig mit der Grundbearbeitung durchgeführt werden. So tritt verständlicherweise in immer stärkerem Maße die Forderung nach Bodengrundbearbeitungs- und Feinbearbeitungsgeräten zur gleichzeitigen Bestellung des Bodens, zur Entwicklung der Kombination dieser Geräte und ihrem baldmöglichsten Einsatz in Erscheinung.

Die Mitteltieflockerer dienen in erster Linie zur Vertiefung der bestellten Bodenschichten durch Lockerung.

Der Anmelderin dieser Erfindung ist erst die Bedeutung der mit der Bodengrundbearbeitung gleichzeitig erfolgenden Feinbearbeitung klar geworden und sie erreichte im Zuge ihrer technischen Entwicklungstätigkeit beachtenswerte Erfolge mit der Kombination von Grundlockerungsmaschinen und einzelnen Feinbearbeitungsgeräten. Das eine Ergebnis dieser Versuchsserie ist die unter der Nr. EP 89115269.6 zum Patent angemeldete, nach einem neuen Prinzip funktionierende Rollhakke, die sich infolge der mit einer Schneidkante ausgerüsteten speziellen Zinkenausbildung und der Möglichkeiten der räumlichen Anordnung des Hakkenkörpers in gleicher Weise zur Untergrundlockerung, zur Vermischung und Vermürbung des Bodens, zur vollständigen Ausjätung der Unkrautpflanzen und zur Gestaltung der Bodenoberfläche einschließlich deren Glättung eignet und die in dieser Weise mittels dieses mehrere Funktionen versehenen Bestellungsgerätes auch ein in die einheimischen Bodenbestellungsmaschinensysteme gut einfügbares vielseitiges Feinbearbeitungsgerät ersetzt.

Von den bekannten, Bodenbearbeitungsmaschinen herstellenden Firmen produziert die Firma LEMKEN in einem Arbeitsgang arbeitende Ringelwalzen, insbesondere für Rigoliertieflockerer, so für mehrscharige, meistens Kehrpflüge zur Feinbearbeitung des Ackers. Die ackerverarbeitenden, in der Reihenfolge größere und kleinere Durchmesser aufweisenden gekuppelten Ringelwalzenpaare sind an den Pflugrahmen mittels einer Zugstange angeschlossen. Zum Stoppelschälen und zur Düngereinarbeitung werden in geringen Arbeitstiefen arbeitende Kultivatoren empfohlen, kombiniert mit Stabwalzen als Bodenverdichtungsgeräte.

Zum Stoppelschälen, zum Vermischen der Pflanzenstengel und Wurzelreste in den Boden zwecks Humusbildung sowie in Abhängigkeit von der Bodendeckung und der Größe der Bodenschollen sind zur Verdichtung der Bodenschicht in verschiedener Tiefe und gleichzeitig zur Erfüllung verschiedener Bodenbestellungsaufgaben geeignete, aus der Kombination von verschiedenen Bodenbestellungsgeräten bestehende Maschinensysteme zu entwickeln.

Ziel der Erfindung ist es demgemäß, mit Hilfe eines Arbeitsmaschinensystems die mit Lockerung erfolgende Bodenbestellung und die gleichzeitige Feinverarbeitung des Bodens zu verwirklichen, wodurch die Anzahl der unerwünschte Bodenverdichtung bewirkenden Bodenbestellungsarbeitsgänge reduziert wird. Ein weiteres Ziel ist, daß die zusammen in einem System eingesetzten unterschiedlichen Geräte bei dem gegebenen Bodenzustand ihre gegenseitige Wirkung verbessern, d.h. eine effektivere Arbeit leisten, und die Kombination der Geräte im Vergleich zu dem jeweils getrennt erfolgenden Einsatz der einzelnen Elemente ein besseres Ergenis gewährleistet.

Aufgabe der Erfindung ist es insbesondere, ein derartiges Bodenbearbeitungsmaschinensystem mit der Kombination der den Boden lockernden Grundbearbeitungs- und der Feinbearbeitungsgeräte unter Verwendung der modernsten, weiterhin der bereits bekannten Bestellungsgeräte zu entwickeln, das der Zielsetzung entsprechend die Bodenbestellungsarbeiten in einem Arbeitsgang verrichtet und einen optimalen bodenphysikalischen Zustand herbeiführt, wobei es energiesparsam und wirtschaftlich betrieben werden kann.

Dem gestellten Ziel entsprechend ist die Erfindung demgemäß ein Bodenbearbeitungsmaschinensystem, insbesondere zum Stoppelschälen und zur Bodenvorbereitung sowie zur Zwischenreihenbestellung von Plantagen und Ackerpflanzenkulturen, das mittels eines Hängewerkes an eine Zugmaschine angeschlossen werden kann und in der Weise ausgebildet ist, daß das Bodenbearbeitungsmaschinensystem aus der Kombination eines mit einem Bodenlockerer versehenen Bodengrundbearbeitungsgerätes und von insbesondere mit vom Boden angetriebenen Werkzeugen versehenen Feinbearbeitungsgeräten besteht und das in der Kombination der Geräte das mit dem Bodenlockerer versehene Bodengrundbearbeitungsgerät ein schwerer Kultivator ist, der einen Hauptträgerrahmen aufweist, auf dem das sich an die Zugmaschine anschließende Hängewerk aufgebaut ist, sowie die Kultivatorglieder einzeln in einer oder mehreren Reihen, in den nebeneinander befindlichen Reihen in der Tiefe gegliedert, befestigt sind,

- an den Hauptträgerrahmen über eine feste Verbindung oder über eine Parallelogrammaufhängung mit Tiefenverstellvorrichtung versehen ein Flachträgerrahmen angeschlossen ist, an dem mit einer Schneidkante versehene Feinbearbeitungsgeräte befestigt sind, wie z.B. Rollhacken oder Spateneggen oder Scheibeneggen,
- als weiteres Bodenfeinbearbeitungsgerät ein oder mehrere mit Zugbalken versehene, in einem Rahmen gelagerte, mit einem bestimmten Profil versehene, die Bodenoberfläche gestaltende Geräte vorgesehen sind, der Rahmen entweder an den Hauptträgerrahmen oder an den Flachträgerrahmen angelenkt ist, auf dem Flachträgerrahmen ein oder mehrere mit der Tiefenbegrenzervorrichtung verstellbar verbundene Zugbalken angeordnet sind,
- weiterhin daß relativ zum Hauptträgerrahmen die Lage der an diesem befestigten Kultivatorglieder, relativ zum Flachträgerrahmen die Lage der an diesem befestigten mit Schneidkante versehenen Bodenfeinbearbeitungsgeräte verstellbar ist, weiterhin relativ zum Flachträgerrahmen die Lage des bzw. der an diesen angelenkten, die Bodenoberfläche formenden Gerätes/Geräte mittels einer Tiefenbegrenzervorrichtung verstellbar ist, wobei zur Verstellung (Einstellung) der Lage des Hauptträgerrahmens ein mit Schraubenspindel versehener Hängearm der Zugmaschine zur gegenseitigen Verstellung der Lage des Hauptträgerrahmens und des Flachträgerrahmens als Tiefenverstellvorrichtung ausgebildet ist.

Zur Vergrößerung der Arbeitsbreite können ein oder mehrere Bestellungselemente an als Flügel beweglich angelenkten Rahmen befestigt sein, zu deren Betätigung hydraulische Arbeitszylinder vorgesehen sind.

Die erfindungsgemäßen Kultivatorglieder haben starre Bodenlockererwerkzeugschäfte, Scherbolzen, Bodenlockerungsflügel in rechtsseitiger und linksseitiger Ausführung, auswechselbare Doppelherz- oder lanzenförmige Lockerungsmesser; zur Befestigung der Kultivatorglieder sind an den Hauptträgerrahmen geschweißte, mit Bohrungen versehene Halter vorgesehen.

Die mit lanzenförmigen Lockerungsmessern versehenen starren Bodenlockerungswerkzeugschäfte der einzelnen Kultivatorglieder sind gegen Überlastung mit Scherbolzen oder mit federnden Bauelementen mit automatischer Rückstellung versehen.

Das als eine mit Schneidkante versehene Rollhacke ausgeführte Bodenfeinverarbeitungsgerät ist näher gesehen eine der EP-Anmeldung Nr. 89 115 269.6 entsprechende Rollhacke mit Einzelbefestigung in einer oder mehreren Reihen angeordnet und zur Zwischenreihenbestellung fallweise in nebeneinander liegenden Reihen abwechselnd in rechts- und linksseitiger Ausführung gehalten.

Die die Bodenoberfläche bildenden Geräte mit Bodenantrieb des erfindungsgemäßen Bodenbearbeitungsmaschinensystems weisen eine zylindrische, sternförmige oder ringelförmige usw. Mantelfläche auf oder sind Oberflächenschollenbrecher und Schollenzerkleinerer, die ein Latten-, Spiral-, Draht-, Rohr-, verzahntes Lattenprofil oder ein ähnliches Profil aufweisen, oder sind Verdichtungswalzen mit glatter oder stachliger Oberfläche.

In dem erfindungsgemäßen Bodenbearbeitungsmaschinensystem bilden als Kombination der Bodengrundbearbeitungs- und Feinbearbeitungsgeräte ein aus Kultivatorgliedern mit lanzenförmigem Bodenlockerungsmesser und Lockerungssech und Lockerungsflügeln ausgebildeter schwerer Kultivator und Rollhacken, weiterhin eine Sternprofil aufweisende Verdichtungswalze das Arbeitsmaschinensystem.

In einem weiteren erfindungsgemäßen Bodenbearbeitungsmaschinensystem bilden als Kombination der Bodengrundbearbeitungs- und Feinbearbeitungsgeräte ein zur Vorbereitung der Böden mit doppelherzförmigem Bodenlockerersech und Lockererflügeln versehener schwerer Kultivator und eine Scheibenegge, weiterhin die Kombination einer Schollen brechenden und ackerschleifenden Schrägstab-Walzenegge das Arbeitsmaschinensystem.

Ein ebenfalls erfindungsgemäßes Bodenbearbeitungsmaschinensystem ist ein solches, bei dem als Kombination der Bodengrundbearbeitungs- und Feinbearbeitungsgeräte zur Zwischenreihenbestellung und Anhäufelung von Ackerpflanzenkulturen in den Zwischenreihenabständen entsprechender Teilung angeordnete, an den Hauptträgerrahmen montierte, mit lanzenförmigen Bodenlockerungssechen und Lockerungsflügeln versehene schwere Kultivatorglieder und Rollhacken in linksseitiger Ausführung sowie Dreheggen das Arbeitsmaschinensystem bilden.

Ein erfindungsgemäßes Bodenbearbeitungsmaschinensystem ist weiterhin ein solches, bei dem zur Bearbeitung des lockeren Bodens und zur Unkrautvernichtung in Plantagen die Kombination eines mit lanzenförmigen Bodenlockerersechen und Lockererflügeln versehenen schweren Kultivators, von Rollhacken, weiterhin einer eine glatte Oberfläche aufweisenden Walze das Maschinensystem bilden.

An der Hülse eines diagonal angeordneten Bolzenpaares des den Hauptträgerrahmen und den Flachträgerrahmen des erfindungsgemäßen Bodenbearbeitungsmaschinensystems verbindenden Parallelogrammhängewerkes können als Tiefenverstellvorrichtung Gewindespindeln mittels einer Schraubenverbindung miteinander verbunden sein.

Die Erfindung wird anhand eines Ausführungsbeispiels aufgrund von Zeichnungen näher beschrieben. Fig. 1 zeigt die Ausgestaltung eines Bodenbearbeitungsmaschinensystems in Seitenansicht, Fig. 2 veranschaulicht ebenfalls die Zusammenfassung der Geräte zu einem System in Draufsicht, Fig. 3 zeigt die Ausgestaltung des Parallelogrammhängewerkes mit der Tiefenverstellvorrichtung in Seitenansicht, und Fig. 4 zeigt die Draufsicht des Parallelogrammhängewerkes.

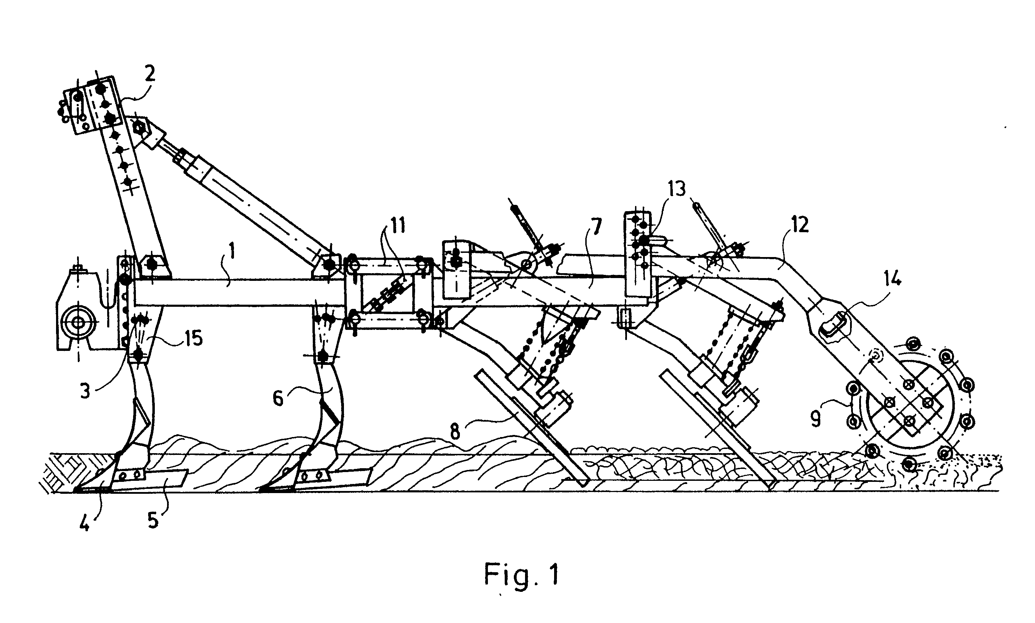

Aus Fig. 1 ist zu ersehen, daß das Grundbearbeitungsgerät des Bodenbestellungsmaschinensystems ein schwerer Kultivator ist. An einen den schweren Kultivator bildenden Hauptträgerrahmen 1 sind Kultivatorglieder 6 gemäß Fig. 1 in zwei Reihen montiert. Der als Gestell der Konstruktion dienende Hauptträgerrahmen 1 ist ein Flächengitter, an das mit Bohrungen versehene Halter zur Aufnahme der Kultivatorglieder 6 angeschweißt sind. Die Lockerungswerkzeuge des schweren Kultivators verfügen über einen starren Werkzeugschaft, ihr Lockerungssech 4 ist auswechselbar, doppelherzförmig, die Lockerungsflügel 5 sind in rechts- und linksseitiger Ausführung gehalten. Die Werkzeugschäfte sind an der Stelle ihrer Einspannung gegen Überbelastung durch Scherbolzen 16 gesichert, wobei jedoch eine weitere Sicherungsmöglichkeit in einem Mechanismus zur Verfügung steht, der durch den Einbau eines federnden Elementes mit automatischer Rückstellung ausgeführt ist.

An den Hauptträgerrahmen 1 ist eine Dreipunktaufhängung der Zugmaschine angeschlossen. Aus Fig. 1 ist zu ersehen, daß der mit einer Schraubenspindel versehene Hängearm der Zugmaschine die Lage des Hauptträgerrahmens 1 bestimmt, bzw. daß dadurch der mit dem Boden eingeschlossene Winkel der Lockerungseche 4 der Kultivatorglieder 6 verstellt werden kann.

An den Hauptträgerrahmen unmittelbar ist ein mit einer Schneidkante versehenes Bodenbearbeitungsgerät mittels einer Parallelogrammaufhängung angeschlossen.

Eine zur Tiefeneinstellung und zur Ankupplung in gleicher Weise geeignete Tiefenverstellvorrichtung 11 verkoppelt die an den Flachträgerrahmen 7 befestigten, mit Schneidkanten ausgestatteten, als Bodenfeinbearbeitungsgeräte eingesetzten Rollhakken. Diese Rollhacken 8 bilden Gegenstand der EP-Anmeldung Nr. 89115269. Die Rollhacken 8 sind infolge der Ausführung ihrer Bodenbestellungselemente zur Verrichtung von zahlreichen wesentlichen Bodenbestellungsaufgaben wie Bodenlockerung, Bodenvermischung, Bodenverdichtung, Bodenplanierung, Schollenzerkleinerung, Bodenbelüftung, Verdecken von Pflanzenresten usw. geeignete, vorzügliche, neue und moderne Bodenbestellungsgeräte. Zur Erfüllung der verschiedenen Aufgaben können sie durch die Auswählbarkeit ihrer räumlichen Anordnung geeignet gemacht werden. Sie werden in rechts- und linksseitiger Ausführung hergestellt und eignen sich deshalb nach der Bodenlockerung auch zur Bodenhäufelung und Kammbildung. Innerhalb des Arbeitsmaschinensystems können die Funktion der Rollhacken 8 fallweise auch Grubbereggen oder Scheibeneggen versehen.

An den Flachhalterrahmen 7 ist ein weiteres von dem Boden angetriebenes und die Bodenoberfläche bearbeitendes Gerät angelenkt, das sich zum Schollenzerkleinern, Bodenverdichten und zum "Abschließen des Bodens" zwecks erhöhter Bewahrung der Bodenfeuchtigkeit eignet. Diese Geräte versehen demgemäß eine die Oberfläche formende bearbeitende, die Schollen zerkleinernde oder den Boden verdichtende Funktion. Ein Rahmen 12 des die Oberfläche bestellenden, die Schollen zerkleinernden oder den Boden verdichtenden Gerätes ist am Flachträgerrahmen 7 angelenkt. Im Rahmen 12 ist eine die in der Figur dargestellte Drehbewegung durchführende Brecherwalze 9 gelagert. Der geschlossene Rahmen der Brecherwalze 9 besteht aus einem Zugbalken 14 und dem Rahmen 12. Die Lage der Brecherwalze 9 kann im Verhältnis zum Flachträgerrahmen 7 mittels eines an den Flachträgerrahmen 7 montierten Tiefenbegrenzers 13 eingestellt werden. Durch Aneinanderfügen der entsprechenden Bohrungen des Rahmens 12 und des Tiefenbegrenzers 13 und ihre mittels Bolzen erfolgende gegenseitige Fixierung wird die Lage der Brecherwalze 9 und so auch die Tiefe der von dieser durchgeführten Arbeit festgelegt. Zugleich wird auch die Arbeitstiefe sämtlicher übriger Bodenbestellungsgeräte bestimmt, da das Arbeitsmaschinensystem von der Brecherwalze 9 abgestützt wird. So wird für die gesamte Dauer der Arbeitsverrichtung eine konstante, gleichmäßige Durchführung der Arbeit sichergestellt.

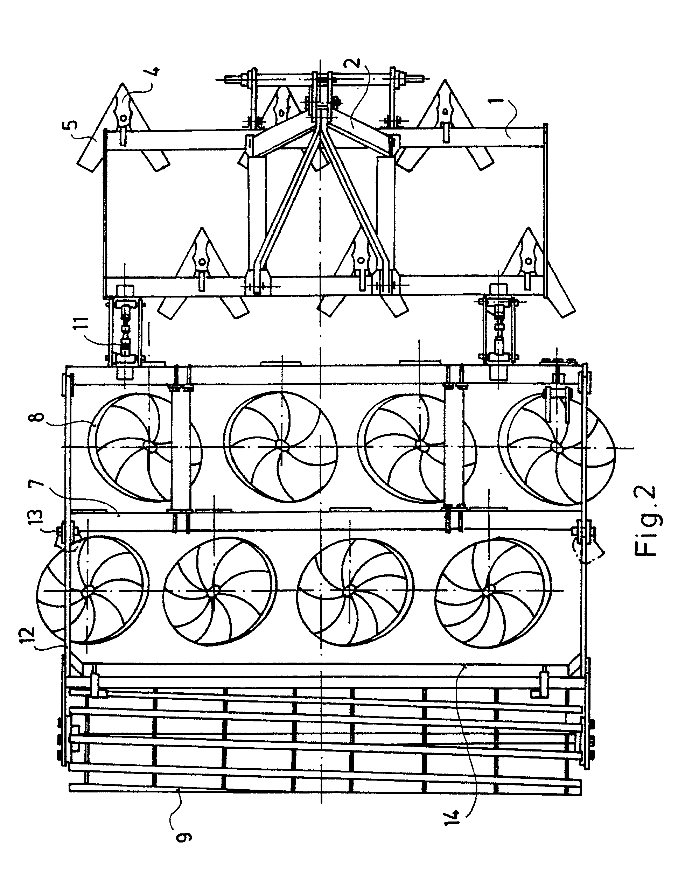

Fig. 2 zeigt die bisher beschriebenen Bodenbestellungsgeräte in Draufsicht. Gut zu sehen ist das in der Erfindung als Beispiel vorgestellte Bodenbearbeitungsmaschinensystem, von näher gesehen die Art und Weise, wie sich das Grundbestellungsgerät und die Bodenfeinbearbeitungsgeräte unter Einhaltung der Bodenbestellungsreihenfolge aneinander anschließen und daß sie die Grund- und die Feinbearbeitung in einem Arbeitsgang einfach wirtschaftlich ermöglichen.

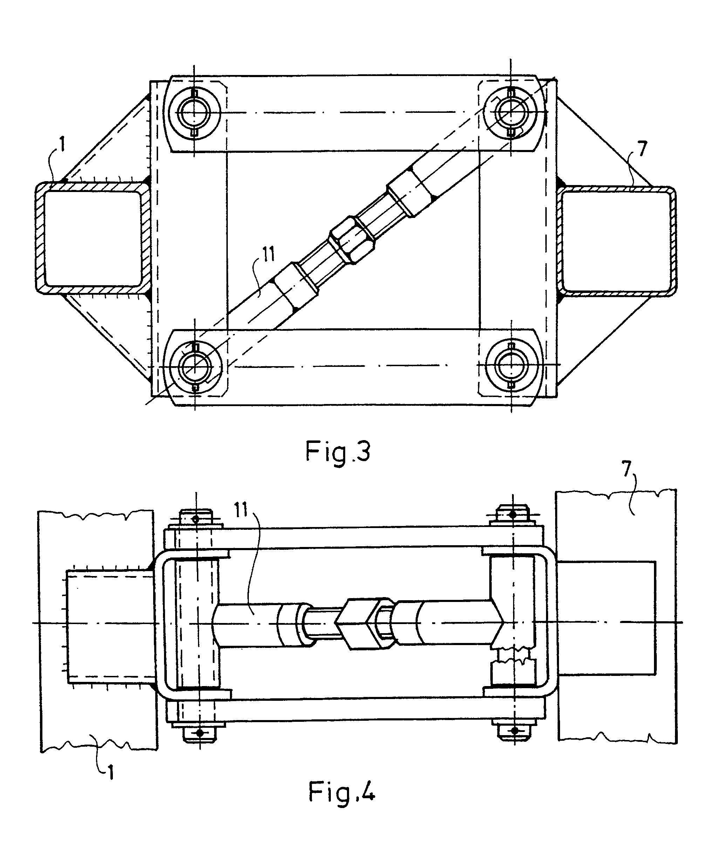

Weiterhin wird beschrieben, wie die Rahmen der einzelnen Bestellungsgeräte relativ zueinander verstellt bzw. eingestellt werden können. Wie bereits erwähnt, kann die Lage des Hauptträgerrahmens 1 mittels einer auf dem Hängerarm der Kraftmaschine befindlichen Spindel verstellt werden. Zur Verbindung des Hauptträgerrahmens 1 und des Flachträgerrahmens 7 dient eine Tiefenverstellvorrichtung 11. Diese weicht von den bekannten Parallelogrammhängewerken darin ab, wie dies auch in Fig. 3 und 4 ersichtlich ist, daß die beiden diagonalen Gelenkbolzen des Parallelogramms anstelle einer mit Federn und auf sonstige Weise erfolgenden Sicherung der Befestigungsarme über eine Schraubenspindel verbunden sind.

Diese Ausführung ermöglicht eine sichere Abstützung und erübrigt weitere Bauelemente. Die Ausführung ist nicht nur sicherer, sondern auch wirtschaftlicher. Zwischen den Rahmenkonstruktionen der beiden einander zugeordneten Bestellungsgeräte ist auch eine feste Verbindung möglich, insbesondere in dem Falle, wenn infolge der Konstruktion keine jeweils getrennte Tiefenverstellung nötig oder möglich ist.

Im weiteren wird beschrieben, welche weiteren über Schneidkanten verfügenden Bearbeitungs- bzw. Oberflächenbearbeitungs-Gerätekombinationen neben dem zur Bearbeitung der verschiedenen Böden gegebenen Grundbestellungsgerät innerhalb des Erfindungsgedankens ausgebildet wurden.

Zur Bearbeitung von durch pflanzliche Stengel- und Wurzelreste stark durchsetzten oder bedeckten Böden wurden die Bearbeitungsglieder des Grundbestellungsgerätes des schweren Kultivators, sich gegenseitig überlappend angeordnet, mit lanzenförmigen Lockerungssechen 4 und Lockerungsflügeln 5 ausgerüstet. Die Rollhacken 8 eignen sich am besten zum Einarbeiten der Pflanzenreste in den Boden. Die Verdichtung wurde mittels eines Walzenpaares mit Sternprofil sichergestellt. Das so ausgebildete Arbeitsmaschinensystem besteht demgemäß aus einer Kombination von schwerem Kultivator, Rollhacke und einem Verdichtungswalzenpaar mit Sternprofil.

Bei der Vorbereitung des Bodens zur Frühjahrsaussaat bestand die Aufgabe in der Beseitigung des dicht auskeimenden Unkrautes und die Lockerung des stark abgesetzten Ackerbodens. Als Grundbearbeitungsgeräte wurden schwere Kultivatoren Scheiben als Fernverarbeitungsgeräte zur Bodenlockerung und Vermischung dienende Scheibeneggen oder Spateneggen, als Gestalter der Bodenoberfläche schleifend wirkende Schrägstab-Walzeneggen im Arbeitsmaschinensystem eingesetzt.

Zur Bestellung und Anhäufelung der Zwischenreihenabstände von Plantagen und Ackerpflanzenkulturen wurden neben den schweren Kultivatoren Rollhackenglieder in rechts- und linksseitiger Ausführung und für die Zwischenreihenabstände Dreheggenglieder in das Maschinensystem eingebaut. Zur Bearbeitung des lockeren Bodens von Plantagen und zur Unkrautbekämpfung wurde das Arbeitsmaschinensystem aus einer Kombination von schweren Kultivatoren, Rollhackengliedern 8 und Walzen mit glatter Oberfläche zusammengestellt.

Zur Vergrößerung der Arbeitsbreite können an der rechten und der linken Seite als Flügel weitere Konstruktionsteile an den Hauptträgerrahmen 1 und an den Flachträgerrahmen 7 angelenkt werden. Die die Bodenoberfläche gestaltenden bzw. die Schollen brechenden Geräte können in ähnlicher Weise in beiden Seitenrichtungen erweitert werden. Die Umstellung der Geräte in die Transportstellung erfolgt auf bekannte Weise mit Hilfe von hydraulischen Arbeitszylindern durch Anheben und Absichern der Flügelteile.

Aus der Kombination der beschriebenen Grund- und Feinbearbeitungsgeräte kann in Abhängigkeit von den verschiedenen Böden, ihrem Zustand und ihrer Bedeckung mit Pflanzenresten das jeweils entsprechend Effektivität aufweisende Bodenbearbeitungsmaschinensystem zusammengestellt werden.

Seine Vorteile bestehen darin, daß gleichzeitig mit der Grundbearbeitung des Bodens in einem Arbeitsgang auch die Feinbestellung, die Einarbeitung der Stengelreste usw. in die entsprechende Tiefe, die Herstellung der entsprechenden Bodenoberfläche und die für die Saatbeete günstige Bodenverdichtung vorgenommen werden kann. Auf diese Weise können die Bodenfeuchtigkeit bewahrt und eine schädliche Bodenverdichtung vermieden werden.

Der in Kombination erfolgende Einsatz der Bodenbestellungsgeräte ist in seiner Gesamtheit energiesparsam, effektiv und wirtschaftlich.

## Patentansprüche

1. Bodenbearbeitungsmaschinensystem, insbesondere zum Stoppelschälen und zur Bodenvorbereitung sowie zur Zwischenreihenbestellung von Plantagen und Ackerpflanzenkulturen, das an eine Zugmaschine mittels eines Hängewerkes (2) angeschließbar ist, dadurch gekennzeichnet, daß das Bodenbearbeitungsmaschinensystem aus einer Kombination eines mit einem Bodenlockerer versehenen Bodengrundbearbeitungsgerätes und von mit insbesondere bodenbetriebenen Werkzeugen versehenen Bodenfeinbearbeitungsgeräten besteht, und daß in der Kombination der Geräte
   - das mit Bodenlockererwerkzeug versehene Bodengrundbearbeitungsgerät ein schwerer Kultivator ist, der einen Hauptträgerrahmen (1) aufweist, auf dem das an die Zugmaschine angeschließbare Hängewerk (2) aufgebaut ist, und der Kultivatorglieder (6) aufweist, die einzeln in einer oder mehreren Reihen, in den nebeneinander liegenden Reihen in der Tiefe gegliedert aufgehängt sind,
   - an den Hauptträgerrahmen (1) mit einer festen Verbindungs- oder einer Parallelogrammaufhängung mit einer Tiefenverstellvorrichtung (11) versehen ein Flachträgerrahmen (7) angeschlossen ist, auf dem mit Schneidkante versehene Feinbearbeitungsgeräte befestigt sind, wie z.B. Rollhacken (8) oder Spateneggen, oder Scheibeneggen,
   - als weiteres Bodenfeinbearbeitungsgerät ein oder mehrere mit Zugbalken (14) versehene, in einem Rahmen (12) gelagerte, über ein bestimmtes Profil verfügende, die Bodenoberfläche gestaltende Geräte vorgesehen sind, der Rahmen (12) entweder an den Hauptträgerrahmen (1) oder an den Flachträgerrahmen (7) angelenkt ist und auf dem Flachträgerrahmen (7) eine Tiefenbegrenzervorrichtung (13) vorgesehen ist,
   - daß relativ zum Hauptträgerrahmen (1) die Lage der an diesem befestigten Kultivatorglieder (6) verstellbar ist und relativ zum Flachträgerrahmen (7) die Lage der an diesem befestigten, mit Schneidkante versehenen Bodenfeinbearbeitungsgeräte verstellbar ist, und
   - daß relativ zum Flachträgerrahmen (7) die Lage des bzw. der an diesen angelenkten, die Bodenoberfläche gestaltenden Geräte mittels der Tiefenbegrenzervorrichtung (13) verstellt werden kann, wogegen zur Verstellung der Lage des Hauptträgerrahmens (1) der mit einer Schraubenspindel versehene Hängearm der Zugmaschine, zur Verstellung der gegenseitigen Lage des Hauptträgerrahmens (1) und des Flachträgerrahmens (7) die Tiefenverstellvorrichtung (11) vorgesehen ist,

2. Bodenbearbeitungsmaschinensystem nach Anspruch 1, dadurch gekennzeichnet, daß zur Vergrößerung der Arbeitsbreite ein oder mehrere Bodenbearbeitungselemente an flügelartig beweglich angelenkten Rahmen befestigt sind, zu deren Betätigung hydraulische Arbeitszylinder vorgesehen sind.

3. Bodenbearbeitungsmaschinensystem nach Anspruch 1 oder 2, dadurch gekennzeichnet, daß die einzelnen Kultivatorglieder (6) einen starren Lockerungserkzeugschaft, Scherbolzen (16), Lockerungsflügel (5) in rechts- und linksseitiger Ausführung, eine auswechselbare doppelherzförmige oder lanzenförmige Lockerungsseche (4) und zur Befestigung der Kultivatorglieder (6) am Hauptträgerrahmen (1) geschweißte mit Bohrungen versehene Halter (15) aufweisen.

4. Bodenbearbeitungsmaschinensystem nach Anspruch 1 oder 2, dadurch gekennzeichnet, daß die mit lanzenförmigen Lockerungssechen (4) versehenen starren Lockerungswerkzeugschäfte der einzelnen Kultivatorglieder (6) gegen Überlastung mit Scherbolzen (16) oder federnden Elementen mit automatischer Rückstellung versehen sind.

5. Bodenbearbeitungsmaschinensystem nach Anspruch 1 oder 2, dadurch gekennzeichnet, daß die mit Schneidkante versehene Rollhacke als Bodenfeinbearbeitungsgerät vorzugsweise einzeln befestigt ist, wobei in einer oder mehreren Reihen angeordnete Rollhacken (8) zur Zwischenreihenbestellung fallweise in den nebeneinander befindlichen Reihen abwechseld in rechtsseitiger oder linksseitiger Ausführung ausgebildet sind.

6. Bodenbearbeitungsmaschinensystem nach Anspruch 1 oder 2, dadurch gekennzeichnet, daß die bodenangetriebenen, die Bodenoberfläche gestaltenden Geräte eine zylindrische, sternförmige oder ringelförmige u. dergl. Mantelfläche aufweisen oder Oberflächenschollenbrecher und Schollenzerkleinerer sind, die Latten-, Spiralen-, Draht-, Rohr- und verzahnte Latten- oder ähnliche Profile aufweisen oder Verdichtungswalzen sind, die eine glatte oder stachlige Oberfläche aufweisen.

7. Bodenbearbeitungsmaschinensystem nach Anspruch 1 oder 2, dadurch gekennzeichnet, daß als Kombination der Bodengrundbearbeitungs- und Bodenverfeinerungsgeräte ein aus Kultivatorgliedern (6) mit lanzenförmigem Lockerungssech (4) und Lockerungsflügeln (5) ausgebildeter schwerer Kultivator, Rollhacken (8) und weiterhin Verdichtungswalzen mit Sternprofil das Arbeitsmaschinensystem bilden.

8. Bodenbearbeitungsmaschinensystem nach Anspruch 1 oder 2, dadurch gekennzeichnet, daß als Kombination der Bodengrundbearbeitungs- und Bodenfeinbearbeitungsgeräte ein zur Bodenvorbereitung mit doppelherzförmigem Lockerungssech (4) und Lockerungsflügeln (5) versehener schwerer Kultivator, eine Scheibenegge und weiterhin eine die Kombination einer schollenbrechenden und einer schleifenden Wirkung aufweisende Schrägstabwalzenegge das Arbeitsmaschinensystem bilden.

9. Bodenbearbeitungsmaschinensystem nach Anspruch 1 oder 2, dadurch gekennzeichnet, daß als Kombination der Bodengrundbearbeitungs- und Bodenfeinbearbeitungsgeräte zur Zwischenreihenbestellung und Anhäufung von Akkerpflanzenkulturen in den Zwischenreihenabständen entsprechender Teilung angeordnete, an den Hauptträgerrahmen (1) montierte, mit lanzenförmigen Lockerungssechen (4) und Lockerungsflügeln (5) versehene Kultivatorglieder (6) und Rollhacken (8) in rechts- und linksseitiger Ausführung sowie Dreheggen das Arbeitsmaschinensystem bilden.

10. Bodenbearbeitungsmaschinensystem nach Anspruch 1 oder 2, dadurch gekennzeichnet, daß zur Bearbeitung des lockeren Bodens von Plantagen und zur Unkrautbekämpfung ein mit lanzenförmigen Lockerungssechen (4) und Lockerungsflügeln (5) versehener schwerer Kultivator, Rollhacken (8) und weiterhin eine Walzenkombination mit glatter Oberfläche das Arbeitsmaschinensystem bilden.

11. Bodenbearbeitungsmaschinensystem nach Anspruch 1 oder 2, dadurch gekennzeichnet, daß die Hülsen des einen diagonal angeordneten Bolzenpaares eines den Hauptträgerrahmen (1) und den Flachträgerrahmen (7) verbindenden Parallelogrammhängewerkes über Gewindespindeln mit Schraubenverbindung als Tiefenverstellvorrichtung (11) verbunden sind.

Fig. 1

EP 0 453 852 A1

Fig.2

9

Fig.3

Fig.4

Europäisches
Patentamt

**EUROPÄISCHER
RECHERCHENBERICHT**

Nummer der Anmeldung

**EP 91 10 5531**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | DE-U-7 736 147  (BAYERISCHE PFLUGFABRIK GMBH) <br> * das ganze Dokument * <br> – – – | 1,6,7,8 | A 01 B 49/02 |
| Y,A | US-A-3 010 744  (G. W. HOLLIS) <br> * Spalte 2, Zeile 45 - Spalte 3, Zeile 39; Figuren 1, 2 * <br> – – – | 1,6,7,3 | |
| A | EP-A-0 280 048  (RABEWERK HEINRICH CLAUSING) <br> * Spalte 3, Zeile 45 - Spalte 5, Zeile 1; Figuren 1, 2 * <br> – – – | 1,3-9 | |
| A | EP-A-0 039 792  (E. WEICHEL) <br> * Anspruch 1; Figuren 1, 2 * <br> – – – | 1,3,4,6-8 | |
| A | FR-A-2 326 135  (C. VAN DER LELY N.V.) <br> * Figuren 1, 2 * <br> – – – | 1,6,7,9 | |
| A | EP-A-0 071 516  (J. DOREZ) <br> * Figur 4 * <br> – – – | 1,11 | |
| A | US-A-4 484 636  (E. R. HODGSON JR.) <br> * Spalte 4, Zeile 58 - Spalte 5, Zeile 23; Figuren 1, 3, 6 * <br> – – – | 2 | |
| A | DD-A-2 587 39  (KOMBINAT FORTSCHRITT LANDMA-SCHINEN) <br> * Zusammenfassung * <br> – – – | 3,4 | RECHERCHIERTE SACHGEBIETE (Int. Cl.5) <br><br> A 01 B |
| A,D | EP-A-0 358 014  (AGRIKON MEZÖGAZDASAGI GEPGY-ARTO ÜZLETAG) <br> – – – – – | | |

Der vorliegende Recherchenbericht wurde für alle Patentansprüche erstellt

| Recherchenort | Abschlußdatum der Recherche | Prüfer |
|---|---|---|
| Berlin | 05 Juli 91 | MERCKX A M |